# EUROPEAN PATENT APPLICATION

(11) **EP 1 069 443 A2**
(43) Date of publication of application: **17.01.2001**
(21) Application number: 00305848.4
(22) Date of filing: 11.07.2000
(51) Int. Cl.: G02B 5/08, G02B 7/182

(54) **Mirror**

(30) Priority: 13.07.1999 JP 19844799
(71) Applicant: Sekisui Jushi Kabushiki Kaisha Shiga-Ryuoh Kojou, Gamoh-Gun, Shiga (JP)
(72) Inventor: Kazutoshi, Takamuro Sekisui Jushi Kabushiki Kaisha, Ooaza Kagami Ryouh-Cho, Gamoh-Gun, Shiga (JP)
(74) Representative: Vleck, Jan Montagu

(57) **Abstract**

A reflection mirror base 1 has a mirror surface 11 on the front face, the outer periphery of which is bent rearwardly to form a bend 12, which in turn is bent outwardly with respect to the mirror surface 11 to form a flange 13. A plurality of support rods 2 are radially arranged on the rear face of the reflection mirror base 1 such that each support rod has its basal end positioned at the rear face centre of the reflection mirror base 1, with the rear face exposed. Each support rod 2 has its extreme end fixed to the flange 13 and its basal end fixed to a mounting plate 3. The mounting plate 3 comprises a seat plate 31 to be fixed on the basal end of the support rod 2 and a mounting piece 32 rising from the seat plate 31. The mounting piece 32 serves to fix the reflection mirror base 1 to a post.

## Description

### BACKGROUND OF THE INVENTION

The present invention relates to a mirror for outdoor use having a defogging property.

Generally, in order to ensure road safety for vehicles and pedestrians, convex or concave reflection mirrors are installed at a blind corner or where the view is limited. However, the conventional reflection mirrors are susceptible to dew condensation on the mirror surface, particularly during the night or cold times because of the difference between the outdoor air temperature and the reflection mirror temperature. Then, the mirror surface is fogged up and functions poorly as a reflection mirror.

The dew condensation which causes the fog on the mirror surface occurs when the temperature of the reflection mirror drops lower than the dew point of the surrounding atmosphere. The applicant's Japanese Patent Application Laid-open No. H7-229113 (JP-A-229113/1995) discloses a road reflection mirror comprising a reflection mirror base whose front face is a mirror surface, a frame fitted around the outer peripheral edge thereof, and support rods attached to the frame, with exposing at least a part of the rear face of the reflection mirror base, the frame being fixed to a post or the like via the support rods.

In this road reflection mirror, the reflection mirror base is mounted on a post or the like, with the rear face of the reflection mirror base exposed. This allows not only the front face but also the rear face of the reflection mirror base to be directly exposed to the surrounding atmosphere, and thereby quickly brings the temperature of the reflection mirror base into equilibrium with the temperature of the surrounding atmosphere. Hence, this road reflection mirror is imparted with a defogging property and capable of quickly removing the dew condensation on the mirror surface of the reflection mirror base.

Nevertheless, the road reflection mirror disclosed in Japanese Patent Application Laid-open No. H7-229113 is constructed by fitting a frame around the outer peripheral edge of the reflection mirror base and attaching support rods on the frame. The frame includes a groove which has a rectangular section without one side, in which groove the outer peripheral edge of the reflection mirror base is inserted. Thus, the frame should be transformed, into a round or angular shape according to the outer peripheral shape of the reflection mirror base. Such frames require much labour to prepare. Besides, the assembly process is also complicated, because of the process of fitting the outer peripheral edge of the reflection mirror base into the groove in the frame. Further, if the width of the groove is greater than the thickness of the outer peripheral edge, a gap is created after the outer peripheral edge of the reflection mirror base is fitted into the groove. No matter how small the gap may be, the wind pressure or the like can cause the reflection mirror base to vibrate against the frame. Moreover, this gap, in combination with the deflection of the support rods, causes the mirror image to quiver. Such a gap may be eliminated by designing the groove in a proper width. In this case, however, it is difficult to fit the outer peripheral edge of the reflection mirror base into the groove, giving another trouble in the attachment of the frame. Despite the above problems, accuracy is required in the manufacture and installation of a road reflection mirror.

In another aspect, the reflection mirror base is poorly self-supported by itself, unless fitted with the frame. Without support, the reflection mirror base is vulnerable to torsion during transport or assembly. Not only does this torsion distort the mirror image, but it is extremely difficult to correct the torsion. The known road reflection mirror should be handled with closest possible care and attention.

### SUMMARY OF THE INVENTION

The present invention provides a mirror as defined in claim 1. Preferred embodiments of the present invention provide a road reflection mirror which has a defogging property, which is easy to manufacture and assemble, which prevents torsion of the reflection mirror base and which further improves visibility.

A first embodiment of a road reflection mirror embodying the invention (hereinafter called embodiment 1) comprises: a reflection mirror base having a front face and a rear face and formed with a mirror surface on the front face, an outer periphery of which is bent rearwardly to form a bend, which in turn is bent outwardly with respect to the mirror surface to form a flange; a plurality of support rods radially arranged on the rear face of the reflection mirror base such that each support rod has a basal end thereof positioned at a rear face centre of the reflection mirror base and an extreme end thereof fixed to the flange, with the rear face of the reflection mirror base exposed; and a mounting plate disposed approximately at the rear face centre of the reflection mirror base and serving to fix the reflection mirror base to a post. The mounting plate comprises a seat plate to be fixed to the basal end of each support rod and a mounting piece rising from the seat plate to be fixed to the post.

The constitution of the embodiment 1 allows the front face and the rear face of the reflection mirror base to be exposed to the surrounding atmosphere, and thereby quickly brings the temperature of the reflection mirror base into equilibrium with that of the surrounding atmosphere. As a result, the mirror surface is endowed with a defogging property, which effects quick removal of the dew condensed thereon.

Besides, the reflection mirror base is arranged to have a bend formed by bending an outer periphery thereof rearwardly, and a flange formed by further bending the bend outwardly with respect to the mirror surface. This constitution imparts rigidity and enhances the self-supporting property. Besides, each support rod can be attached to the reflection mirror base simply by fixing the extreme end of the support rod to the flange. By allowing the support rods to be fixed in this manner, this constitution not only simplifies the manufacture and assembly but also achieves a high-strength structure. Moreover, since there is no room for gap between the reflection mirror base and the extreme end of each support rod, the reflection mirror base does not vibrate against the support rods. Further, the function of the road reflection mirror is not adversely affected by deformations due to temperature or material degradation.

Consequently, this constitution prevents generation of torsion during transport and assembly, and eventually prevents distortion of the mirror image due to the torsion. After the installation, it is still possible to prevent distortion caused by vibration or strong wind. Additionally, in transport, the reflection mirror bases can be stacked by themselves without any support and easily separated from each other by the flange.

Further, in the process of fixing the support rods on the reflection mirror base, the manufacture and assembly is simple and performable with remarkable production efficiency, whereas the prior art employing a frame requires a complex and troublesome process.

Moreover, if a frame is used as taught in the prior art, the frame is deformed over time, creating a gap between the frame and the reflection mirror base and thus causing vibration. Otherwise, when a rock or stone is thrown at the frame or a vehicle collides with it, the frame may be broken and let the reflection mirror base fall off. In contrast, embodiment 1 prevents the reflection mirror base from vibrating against the support rods. Even when any of the support rods is deflected by wind pressure or the like, the mirror image does not quiver. Besides, there is no fear that the reflection mirror base may fall off.

Preferably, in the above constitution of embodiment 1, a protective cover is equipped on the flange and the extreme ends of the support rods fixed to the flange.

This constitution ensures safety during the work. Since neither the flange nor the end of any support rod is exposed, a worker is protected from being injured on contact with such parts. Besides, the protective cover also serves to protect the reflection mirror base itself from damage.

Next, a second embodiment of a road reflection mirror embodying the present invention (hereinafter called embodiment 2) comprises: a reflection mirror base having a front face and a rear face and formed with a mirror surface on the front face, an outer periphery of which is bent rearwardly to form a bend; a plurality of support rods radially arranged on the rear face of the reflection mirror base such that each support rod has a basal end thereof positioned at a rear face centre of the reflection mirror base and an extreme end thereof fixed to the bend, with the rear face of the reflection mirror base exposed; and a mounting plate disposed approximately at the rear face centre of the reflection mirror base and serving to fix the reflection mirror base to a post. The mounting plate comprises a seat plate to be fixed to the basal end of each support rod and a mounting piece rising from the seat plate to be fixed to the post.

The constitution of the embodiment 2 allows the front face and the rear face of the reflection mirror base to be exposed to the surrounding atmosphere, and thereby quickly brings the temperature of the reflection mirror base into equilibrium with that of the surrounding atmosphere. As a result, the mirror surface is endowed with a defogging property, which effects quick removal of the dew condensed thereon.

Besides, the reflection mirror base is arranged to have a bend formed by bending an outer periphery thereof rearwardly, and to fix the extreme end of each support rod to the bend. By allowing the support rods to be fixed in this manner, this constitution not only simplifies the manufacture and assembly but also achieves a high-strength structure. Moreover, since there is no room for gap between the reflection mirror base and the extreme end of each support rod, the reflection mirror base does not vibrate against the support rods. The arrangement of fixing the extreme end of each support rod to the bend thus simplifies the manufacture and assembly improves the production efficiency.

In any preferred constitution of the invention (including embodiment 1) or embodiment 2, a connecting plate may be disposed approximately at the rear face centre of the reflection mirror base, so that the basal ends of the radially arranged support rods can be connected with each other via the connecting plate and fixed on the seat plate as connected.

This constitution improves the mounting strength by supporting the basal end of each support rod with the connecting plate as well as the mounting plate. In addition, even when the mounting plate is detached, the basal ends of the support rods remain connected with each other via the connecting plate. Therefore, packaging can be made with the mounting plate detached, so as to reduce the package thickness by the thickness of the mounting plate. The mounting plate is separately packageable. Hence, this constitution improves the transport efficiency. At the time of installation, the mounting plate only needs to be fixed at the basal end of each support rod.

Preferably, the mounting plate comprises two mounting plates each having an L-shaped section, and the seat plates of the mounting plates are fixed at the basal ends of the support rods, with the mounting pieces thereof positioned back to back with each other at a predetermined interval.

According to this constitution, a fixture or the like to be fixed to a post can be fitted between the mounting pieces. The resulting road reflection mirror can be installed in a simple manner. Notably, the use of two mounting plates can give the following effects. For example, when the deflection of the support rods due to wind pressure, etc. is transmitted to both mounting plates, the connecting plate is subjected to complex vibration deriving from the extreme ends of the support rods fixed to the flange or the bend and also from the mounting plates disposed at the basal ends. However, such vibration is cancelled between the two mounting plates and damped soon, so that the quiver of the mirror image is solved quickly. Therefore, the road reflection mirror can be easily installed on a post with enhanced work efficiency. By utilising two mounting plates, the road reflection mirror is endowed with an excellent function of solving the quiver of the mirror image quickly. Incidentally, these mounting plates may be joined into an integral structure by a bolt or the like. Nevertheless, in terms of the quick recovery from the quiver of the mirror image, it is preferable that the mounting plates are formed independently from each other instead of being integrated.

Further, in any of the above road reflection mirror, the mirror surface is preferably coated with a photocatalyst.

According to this constitution, it is possible to prevent the fog on the mirror surface resulting from the temperature difference between the reflection mirror base and the surrounding atmosphere, or even a slight fog on the mirror surface due to the stagnant air. Additionally, this constitution contributes to the maintenance of a desirable mirror surface condition by preventing generation of rust on the mirror surface, and, on the other hand, allowing the dust deposited on the mirror surface to be readily washed off by rain. The thus obtained road reflection mirror is not only adjustable to environmental changes but also highly durable.

### BRIEF DESCRIPTION OF THE DRAWINGS

Fig. 1 is a rear view of an embodiment of the road reflection mirror according to the embodiment 1.
Fig. 2 is a sectional view of an embodiment of the road reflection mirror according to the embodiment 1.
Fig. 3 is a perspective view of a support rod applied in an embodiment of the road reflection mirror according to embodiment 1.
Fig. 4 represents the structure of a mounting plate applied in an embodiment of the road reflection mirror according to embodiment 1, wherein Fig. 4(a) is a rear view thereof, Fig. 4(b) is a front view thereof, and Fig. 4(c) is a side view of two mounting plates joined together.
Fig. 5 represents the structure of a connecting plate applied in an embodiment of the road reflection mirror according to embodiment 1 or embodiment 2, wherein Fig. 5(a) is a rear view thereof, and Fig. 5(b) is a side view thereof.
Fig. 6 represents perspective views of other examples of the support rod applicable in an embodiment of the road reflection mirror according to the embodiment 1.
Fig. 7 represents cutaway perspective views showing the structures of still other support rods applicable in an embodiment of the road reflection mirror according to the embodiment 1.
Fig. 8 is a rear view of an embodiment of the road reflection mirror according to embodiment 2.
Fig. 9 is a sectional view of an embodiment of the road reflection mirror according to embodiment 2.
Fig. 10 represents the structure of a support rod applied in an embodiment of the road reflection mirror according to embodiment 2, wherein Fig. 10(a) is a view taken from the extreme end thereof, Fig. 10(b) is a front view thereof, and Fig. 10(c) is a side view thereof.
Fig. 11 represents the structure of a mounting plate applied in an embodiment of the road reflection mirror according to embodiment 2, wherein Fig. 11(a) is a rear view thereof, Fig. 11(b) is a front view thereof, and Fig. 11(c) is a side view of two mounting plates joined together.
Fig. 12 is a rear view of an alternative construction of the road reflection mirror according to embodiment 2.
Fig. 13 is a sectional view of the embodiment shown in Fig. 12.
Fig. 14 represents the structure of a support rod applied in the embodiment shown in Fig. 12, wherein Fig. 14(a) is a view taken from the extreme end thereof, Fig. 14(b) is a front view thereof, and Fig. 14(c) is a side view thereof.
Fig. 15 represents the structure of a connecting plate applied in the embodiment shown in Fig. 12, wherein Fig. 15(a) is a rear view thereof, and Fig. 15(b) is a side view thereof.
Fig. 16 represents the structure of a mounting plate applied in the embodiment shown in Fig. 12, wherein Fig. 16(a) is a rear view thereof, Fig. 16(b) is a front view thereof, and Fig. 16(c) is a side view of two mounting plates joined together.
Fig. 17 represents the structure of another connecting plate applied in an embodiment of the road reflection mirror according to the Invention 2, wherein Fig. 17(a) is a rear view thereof, and Fig. 17(b) is a side view thereof.
Fig. 18 represents the structure of an alternative support rod for use in connection with a road reflection mirror according to embodiment 2, wherein Fig. 18(a) is a view taken from the extreme end thereof, Fig. 18(b) is a front view thereof, and Fig. 18(c) is a side view thereof.
Fig. 19 shows an arrangement of the support rods applied in an embodiment of the road reflection mirror according to embodiment 1 or embodiment 2.
Fig. 20 shows another arrangement of the support rods applied in an embodiment of the road reflection mirror according to embodiment 1 or embodiment 2.

### DETAILED DESCRIPTION OF PREFERRED EMBODIMENTS

Embodiments of the present invention are hereinafter described with reference to the drawings.

### Embodiment 1

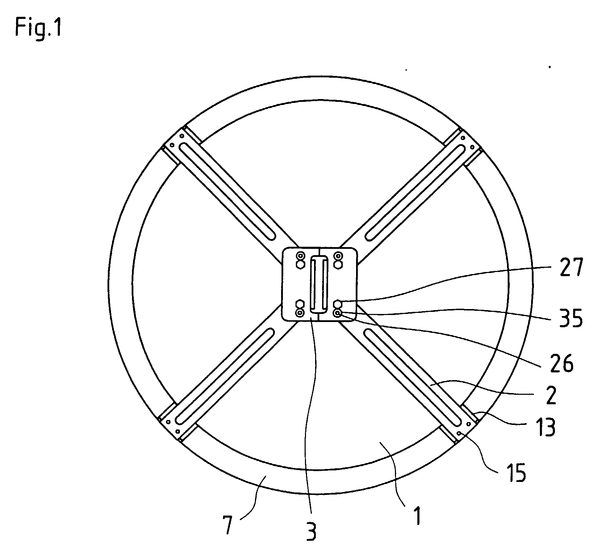

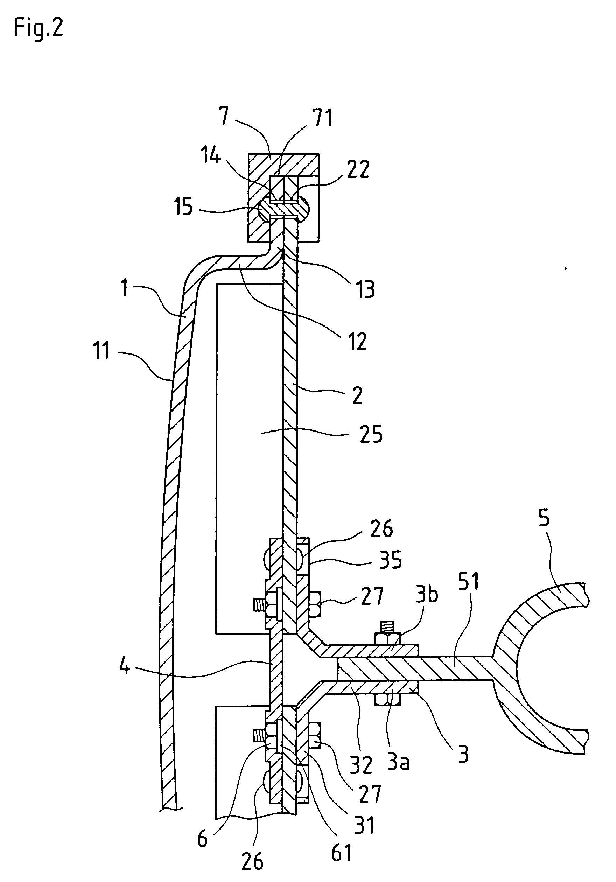

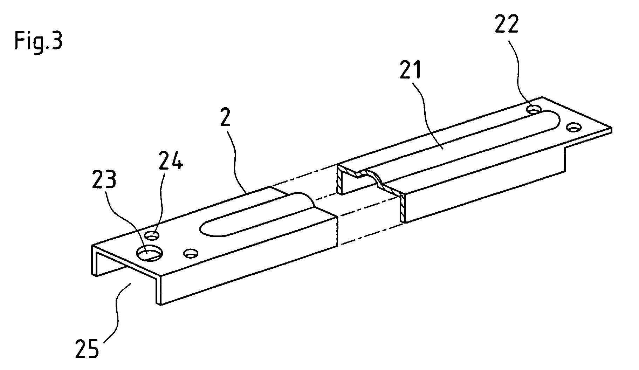

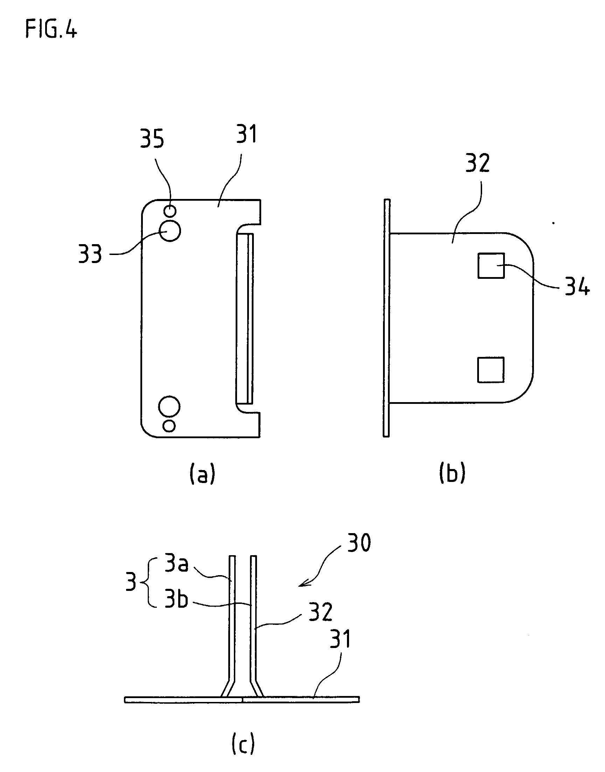

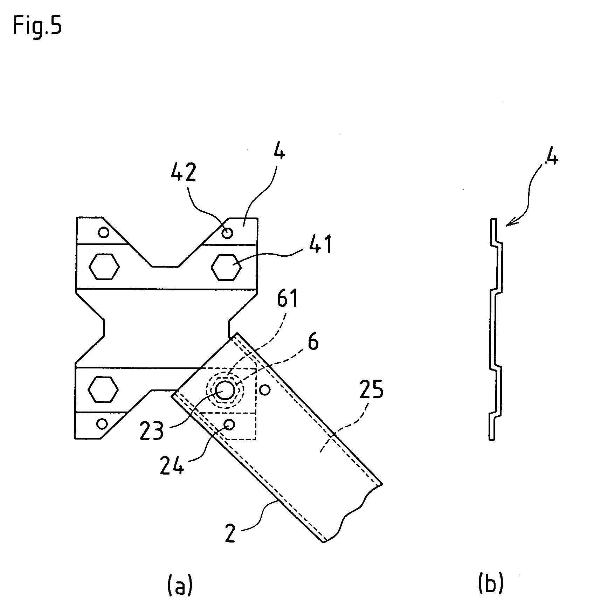

Fig. 1 is a rear view of an embodiment of the road reflection mirror according to embodiment 1. Fig. 2 is a sectional view thereof. Fig. 3 is a perspective view of a support rod applied in this embodiment. Fig. 4 represents the structure of a mounting plate applied in this embodiment, wherein Fig. 4(a) is a rear view thereof, Fig. 4(b) is a front view thereof, and Fig. 4(c) is a side view of two mounting plates joined together. Fig. 5 represents the structure of a connecting plate applied in this embodiment (N.B. this figure is also referred to in the embodiment according to embodiment 2 below), wherein Fig. 5(a) is a rear view thereof, and Fig. 5(b) is a side view thereof.

The road reflection mirror of this embodiment comprises a reflection mirror base 1, four support rods 2, a mounting plate 3 and a connecting plate 4. These components are described below in detail.

The reflection mirror base 1 has a front face and a rear face and is formed with a mirror surface 11 on the front face, the outer periphery of which is bent rearwardly to form a bend 12. The bend 12 is then bent outwardly with respect to the mirror surface 11 to form a flange 13. The flange 13 is provided with holes 14 for attaching support rods 2. When the support rod 2 is placed, the hole 14 defines a single through-hole with a hole 22 in the support rod 2. The flange 13 and the support rod 2 are closely fixed by a rivet 15 inserted in this through-hole. The bend 12 and the flange 13 are formed integrally with the reflection mirror base 1 by drawing a flat plate. The bend 12 and the flange 13 are provided along the entire periphery of the reflection mirror base 1.

It is preferable to integrate the bend 12 and the flange 13 with the reflection mirror base 1, as described in this embodiment, thereby to simplify its manufacture and increase its strength. The bend 12 and the flange 13 are preferably provided along the entire periphery of the reflection mirror base 1, but they may be formed along a part thereof.

The materials for the reflection mirror base 1 include metals such as stainless steel, synthetic resins such as acrylic resins, glass, etc. In order to equilibrate the temperature of the reflection mirror base 1 with that of the surrounding atmosphere quickly, a material with good heat conductivity and excellent rustproof property, such as stainless steel, is suitable. The mirror surface 11 is prepared by polishing the front face of the reflection mirror base 1 to a mirror finish. The mirror surface 11 may be also prepared by laminating a material such as acrylic resin, stainless steel or glass on the front face of the reflection mirror base 1. Thus, the composition of the mirror surface 11 is not particularly limited.

The shape of the reflection mirror base 1 may be round as shown in Fig. 1 or angular. In general, a round base has a diameter of 600 mm, 800 mm or 1000 mm, and an angular base has a dimension of 450x600 mm or 600x800 mm. Usually, use is made of a convex mirror whose mirror surface has a radius of curvature of 1500 mm, 2200 mm, 3000 mm or 3600 mm and greater.

For the purpose of mounting the reflection mirror base 1 on a post or the like, there are four support rods 2 arranged radially on the rear face of the reflection mirror base 1 such that each support rod 2 has a basal end thereof positioned at the rear face centre of the reflection mirror base 1, with the rear face exposed. As shown in Fig. 3, the section of the support rod 2 defines a rectangle without one side, and its overall profile is an elongated rectangular parallelepiped rod without one surface. A ridge 21 is longitudinally formed on the support rod 2 in order to increase the bending strength. On the extreme end of the support rod 2, a hole 22 is provided in each side thereof to fix the extreme end to the flange 13 of the reflection mirror base 1. The basal end of the support rod 2 is provided with a bolt hole 23, as well as a rivet hole 24 in each side thereof for temporal securement and antirotation. Although the number of the hole 22 need not be strictly specified, it is desirable to form a plurality of holes 22, so that the support rod 2 does not turn while being fixed on the flange 13 of the reflection mirror base 1. With respect to the two rivet holes 24, either one is selected according to the arrangement of the support rod 2.

As shown in Figs. 4(a), (b), the mounting plate 3 comprises a near-rectangular seat plate 31 and a mounting piece 32 rising from an edge of the seat plate 31 vertically and rearwardly with respect to the seat plate 31, and has a near L-shaped section. The seat plate 31 includes bolt holes 33 at predetermined positions, which correspond to the bolt hole 23 in the support rod 2, and clearance holes 35 located in the vicinity of the bolt holes 33. The mounting piece 32 includes two square bolt holes 34 for securing a connecting piece 51 of a fixture 5 between two mounting pieces 32 (see Fig. 2). The fixture 5 is to be fixed on a post or the like. In installing this mounting plate 3, two mounting plates 3a, 3b, positioned back to back with a predetermined interval, are jointly employed as a mounting plate unit 30 as shown in Fig. 4(c). The mounting plate unit 30 is disposed approximately at the centre of the rear face of the reflection mirror base 1.

A connecting plate 4 serves to interconnect the basal ends of the radially arranged support rods 2. The connecting plate 4 has a fixture portion for providing crisscross connection of the support rods 2 (see Fig. 1). Namely, as shown in Fig. 5, the connecting plate 4 has a rectangular shape, with each side notched at the middle portion. Each of the four corner portions is formed with a hexagon hole 41 and a rivet hole 42 which correspond to the bolt hole 23 and the rivet hole 24 in the support rod 2, respectively. The connecting plate 4 and the support rod 2 are securely connected by fitting each corner portion of the connecting plate 4 into a hollow 25 of the support rod 2 and inserting a flanged hexagon nut 6 having a flange 61 into the hexagon hole 41 and the bolt hole 23. The positions of the hexagon holes 41 and the rivet holes 42 are designed to avoid any mutual contact of the basal ends of the four support rods 2 when they are connected.

The above four support rods 2 are arranged on the rear face of the reflection mirror base 1, with the rear face exposed. The mounting plate 3 and the connecting plate 4 are mounted on the rear face centre of the reflection mirror base 1. The installation process is hereinafter explained.

First, the flanged hexagon nut 6 is inserted into each hexagon hole 41 in the connecting plate 4. Then, each corner portion of the connecting plate 4 is positioned with respect to the basal end of each support rod 2 by inserting the corner portion of the connecting plate 4 into the hollow 25 of the support rod 2, with the flange 61 of the flanged hexagon nut 6 sandwiched therebetween. At this time, the bolt hole 23 in the support rod 2 and the flanged hexagon nut 6 should be aligned approximately with each other. Then, the rivet 26 is inserted into the rivet hole 42 in the connecting plate 4 and the rivet hole 24 in the basal end of the support rod 2. Thereby, the basal ends of the support rods 2 are connected with each other via the connecting plate 4.

The connecting plate 4 which holds the support rods 2 in a crisscross arrangement is placed approximately at the rear face centre of the reflection mirror base 1. The extreme end of each support rod 2 is fixed to the flange 13 of the reflection mirror base 1 by fitting means such as a screw or rivet inserted through the hole 22 in the extreme end of the support rod 2 and the hole 14 in the flange 13. Packaging and transport is conducted in this state in which the support rod 2 is thus fixed on the connecting plate 4 and the flange 13. At the installation site, with the mounting pieces 32 of the mounting plate unit 30 (mounting plates 3a, 3b) positioned back to back with each other, a bolt 27 is inserted from each bolt hole 33 in the seat plates 31 into the bolt hole 23 in the support rod 2 and screwed by the flanged hexagon nut 61. Consequently, the connecting plate 4 is fixed to the basal ends of the support rods 2, and the mounting plate unit 30 is fixed across the basal ends of the support rods 2. In this case, the head of the rivet 26 for temporal securement of the support rod 2 is received in the clearance hole 35 in the seat plate 31 and does not interfere with the installation of the mounting plate unit 30.

Preferably, the flange 13 and the extreme ends of the support rods 2 fixed thereto are equipped with a protective cover 7 having a groove 71 for securing the flange 13 and the extreme ends of the support rods 2. This constitution protects a worker from injuring his hand by the edge of the flange 13 or like dangers. The protective cover 7 may be made of either metal or nonmetal. To improve the identifiability of the mirror surface on the reflection mirror base 1, the protective cover 7 can be readily coloured in bright colours such as red, orange, yellow or fluorescent colours thereof. Preferably, the cover 7 is made of a transformable and stretchable material, so that it can readily fit the flange 13 when covered thereon. From this point of view, the cover 7 is advantageously made of a soft synthetic resin such as rubber, urethane elastomer and other vinyl chlorides. The size and shape of the cover 7 can be suitably modified according to the installation condition of the road reflection mirror. For example, in order to enhance the night-time visibility, it is proposed to increase the width of the cover 7 and attach a reflective sheet or the like on the surface. Thus, the safety, identifiability and visibility can be enhanced simply by equipping the protective cover 7 over the flange 13.

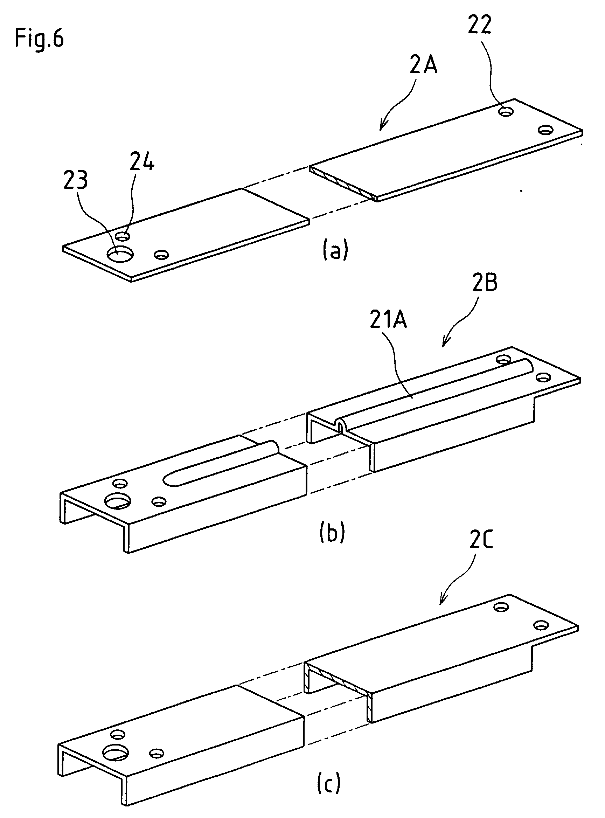

This embodiment employs the support rods of the type shown in Fig. 3, but the support rods should not be limited to them. Other support rods applicable to this embodiment include a support rod 2A of flat plate shape (Fig. 6(a)), a support rod 2B having a rectangular cross section without one side and formed with a ridge 21A extending in the longitudinal direction (Fig. 6(b)) (The ridge 21A looks similar to the ridge 21 shown in Fig. 3, but has a less gentle profile than the ridge 21), and a support rod 2C having a rectangular cross section without one side and formed with no ridge or the like (Fig. 6(c)).

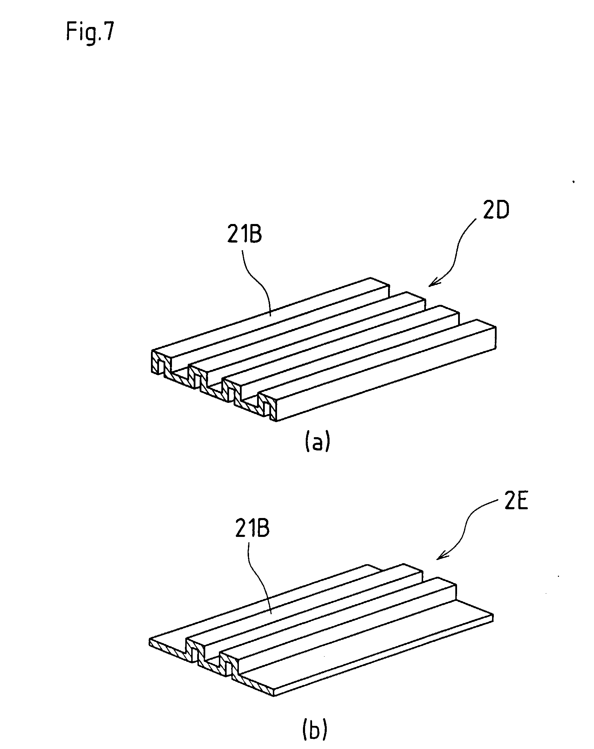

Further, as shown in Fig. 7, the support rod may include a plurality of ridges 21B prepared by bending a flat plate and arranged laterally with respect to each other. By way of illustration, there may be mentioned a support rod 2D formed with four ridges 21B (Fig. 7(a)) and a support rod 2E formed with two ridges 21B (Fig. 7(b)).

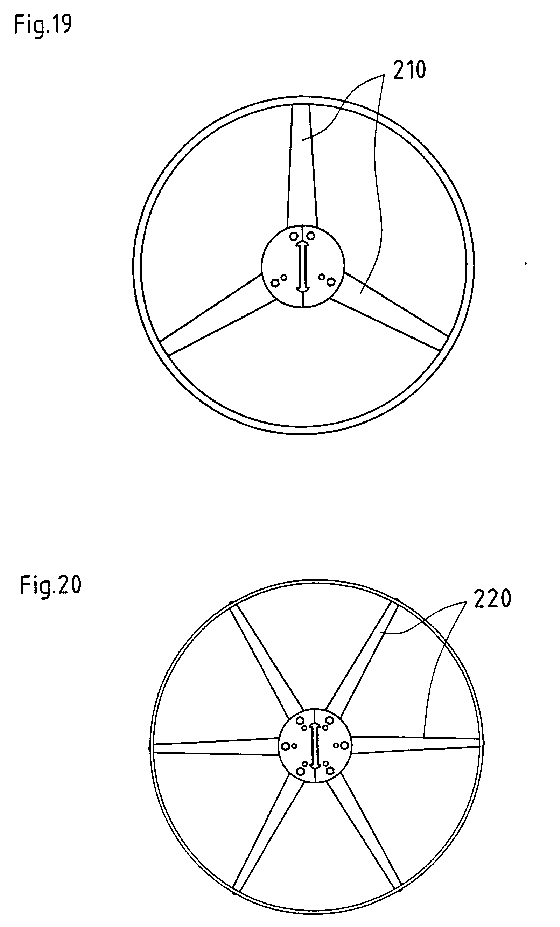

Additionally, the number of the support rods 2 should not be limited to four as in this embodiment, but may be optionally adjusted as far as they exhibit sufficient strength to support the reflection mirror base 1. For example, where the reflection mirror base 1 is small and supportable without much strength, three support rods 210 can be radially arranged as shown in Fig. 19. On the other hand, where the reflection mirror base 1 is large and needs a great strength to be supported, four or more support rods are utilised. In Fig. 20, six support rods 220 are radially arranged accordingly.

### Embodiment 2

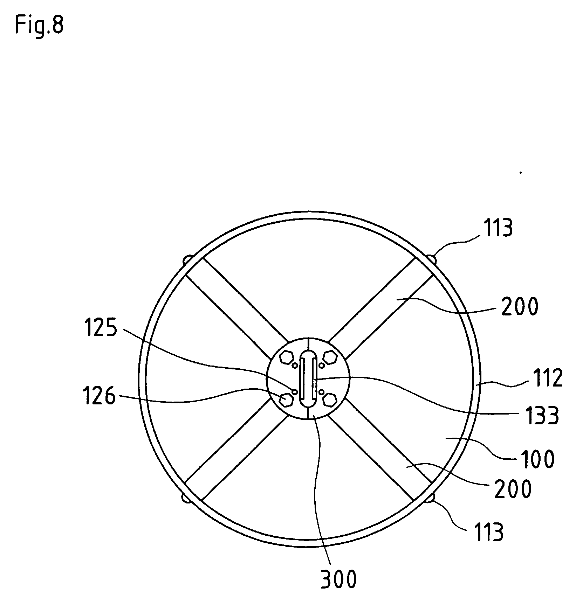

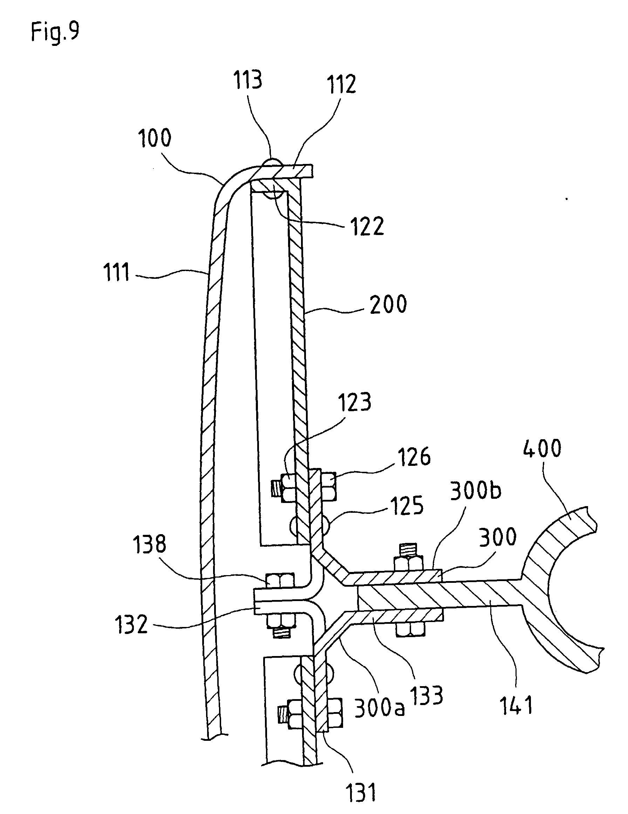

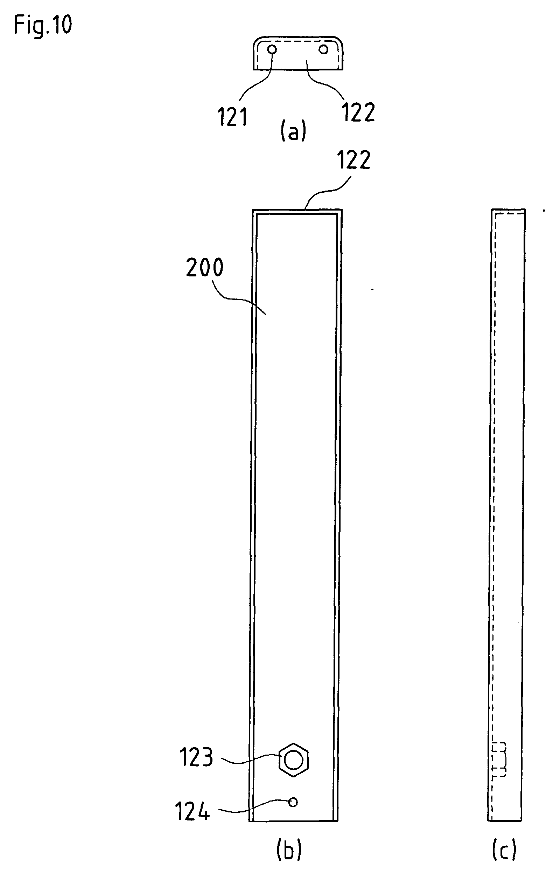

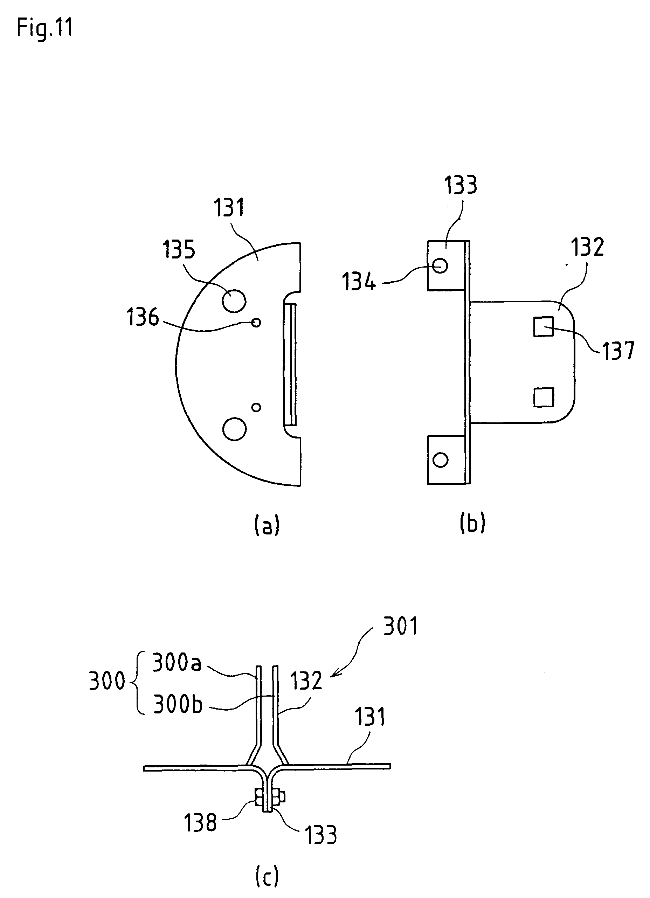

Fig. 8 is a rear view of a second embodiment of the road reflection mirror. Fig. 9 is a sectional view thereof. Fig. 10 represents the structure of a support rod applied in this embodiment, wherein Fig. 10(a) is a view taken from the extreme end thereof, Fig. 10(b) is a front view thereof, and Fig. 10(c) is a side view thereof. Fig. 11 represents the structure of a mounting plate applied in this embodiment, wherein Fig. 11(a) is a rear view thereof, Fig. 11(b) is a front view thereof, and Fig. 11(c) is a side view of two mounting plates joined together.

The road reflection mirror of this embodiment comprises a reflection mirror base 100, four support rods 200 and a mounting plate 300. These components are described below in detail.

The reflection mirror base 100 has a front face and a rear face and is formed with a mirror surface 111 on the front face, the outer periphery of which is bent rearwardly to form a bend 112.

It is preferable to integrate the bend 112 with the reflection mirror base 100 as in this embodiment, thereby to simplify its manufacture and increase its strength. Additionally, the bend 112 is preferably provided along the entire periphery of the reflection mirror base 100, but it may be formed along a part thereof.

The material, shape, size of the reflection mirror base 100 are the same as those mentioned in the above embodiment according to Fig. 1 and Fig. 2, and no further explanation is necessary.

For the purpose of mounting the reflection mirror base 100 on a post or the like, there are four support rods 200 radially arranged on the rear face of the reflection mirror base 100 such that each support rod 200 has a basal end thereof positioned at the rear face centre of the reflection mirror base 100, with the rear face exposed. As shown in Fig. 10, the section of the support rod 200 defines a rectangle without one side, and its overall profile is an elongated rectangular parallelepiped rod without one surface. On the extreme end of the support rod 200, a riser 122 which has a hole 121 on each side thereof is provided to fix the extreme end to the bend 112 of the reflection mirror base 100. The riser 122 has an arcuate shape which curves along the bend 112 of the round reflection mirror base 100. The basal end of the support rod 200 is provided with a nut 123 by welding, as well as a rivet hole 124 for temporal securement and antirotation. Although the number of the hole 121 need not be strictly specified, it is desirable to form a plurality of holes 121, so that the support rod 200 does not turn while being fixed to the bend 112 of the reflection mirror base 100. Preferably, the shape of the riser 122 corresponds to that of the bend 112.

As shown in Figs. 11(a), (b), the mounting plate 300 comprises a semicircular seat plate 131 and a mounting piece 132 rising from an edge of the seat plate 131 vertically and rearwardly with respect to the seat plate 131, and has a near L-shaped section. The seat plate 131 includes bolt holes 135 and rivet holes 136 at predetermined positions, which correspond to the nut 123 and the rivet hole 124 in the support rod 200, respectively. The mounting piece 132 includes two square bolt holes 137 for securing a connecting piece 141 of a fixture 400 between two mounting pieces 132 (see Fig. 9). The fixture 400 is to be fixed on a post or the like. In installing this mounting plate 300, two mounting plates 300a, 300b are jointly employed as a mounting plate unit 301 as shown in Fig. 11(c). The mounting plate unit 301 is disposed approximately at the centre of the rear face of the reflection mirror base 100.

The above four support rods 200 are arranged on the rear face of the reflection mirror base 100, with the rear face exposed. The mounting plate 300 is mounted on the rear face centre of the reflection mirror base 100. The installation process is hereinafter explained.

First, to obtain an integral mounting plate unit 301, the mounting plates 300a, 300b are positioned back to back with a predetermined interval, and opposing legs 133 thereof are joined with each other by a bolt 138 (or a rivet) inserted into opposing joint holes 134.

Next, each support rod 200 and the mounting plate unit 301 are temporarily secured by a rivet 125 inserted through the rivet hole 136 in the seat plate 131 and the rivet hole 124 in the support rod 200. Then, the mounting plate unit 301 is mounted across the basal ends of the support rods 200 by inserting a bolt 126 into each bolt hole 135 in the seat plate 131 and screwing the bolt 126 with the nut 123 of the support rod 200, with adjusting the angle of each support rod 200.

The mounting plate unit 301 radially equipped with the support rods 200 is placed at the rear face centre of the reflection mirror base 100. Thereafter, the extreme end of each support rod 200 is fixed to the bend 112 of the reflection mirror base 100 by fitting means 113 such as a screw or rivet inserted through the hole 121 in the riser 122.

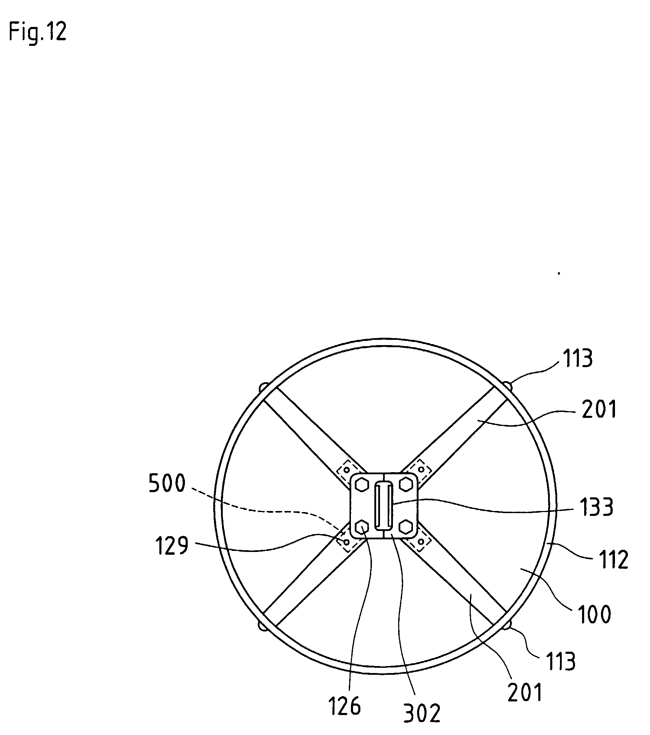

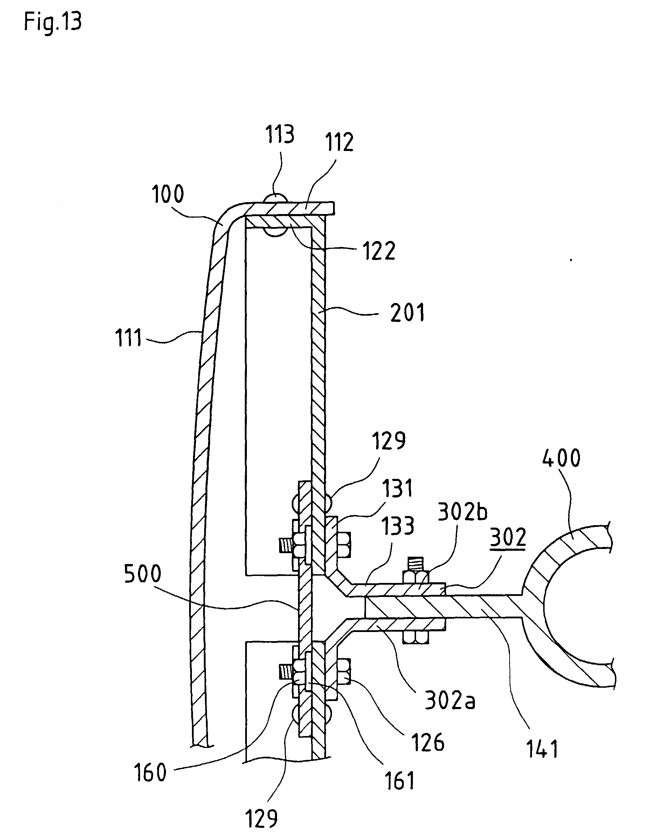

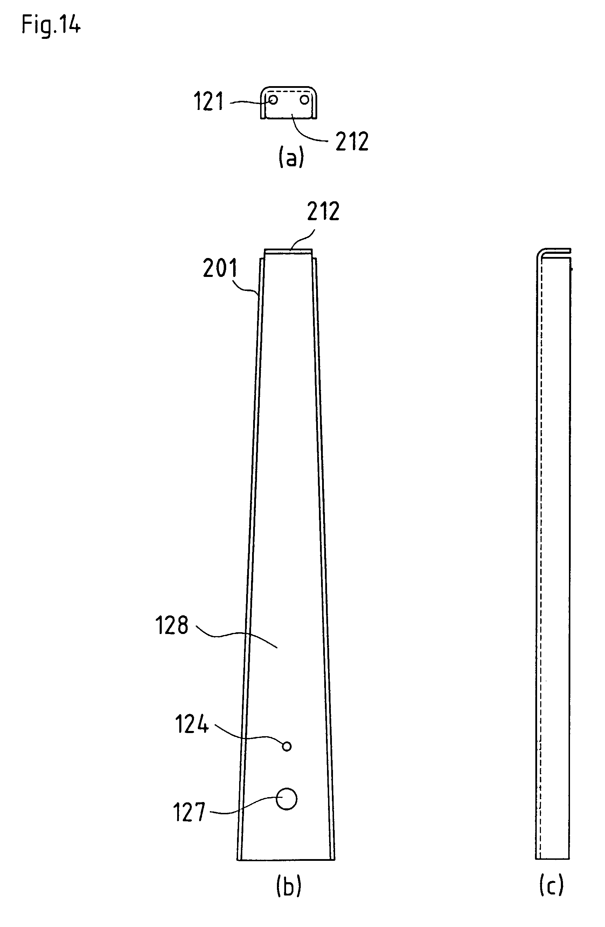

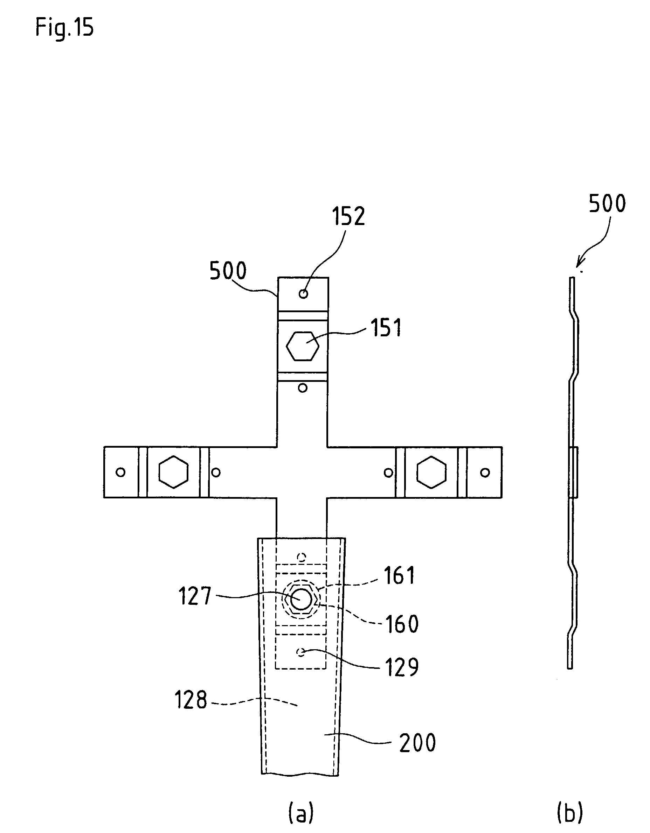

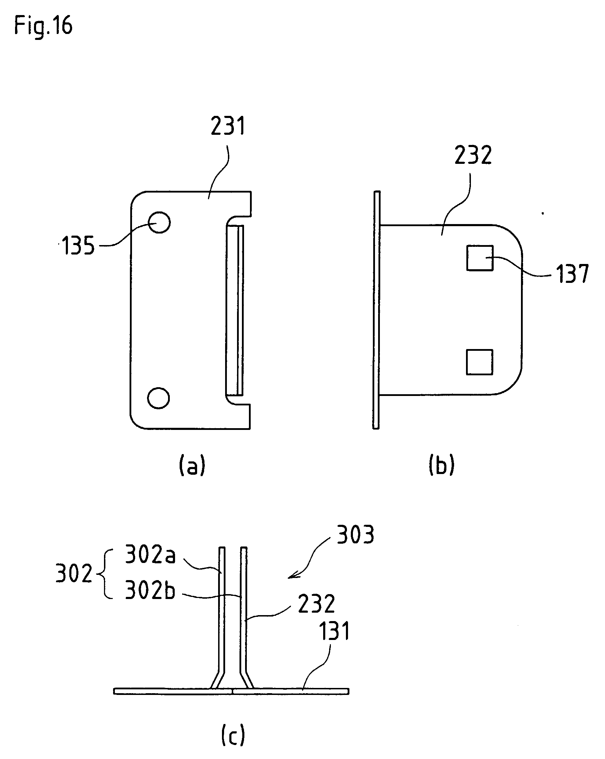

Fig. 12 is a rear view of an alternative construction of a road reflection mirror according to embodiment 2. Fig. 13 is a sectional view thereof. Fig. 14 represents the structure of a support rod applied in this embodiment, wherein Fig. 14(a) is a view taken from the extreme end thereof, Fig. 14(b) is a front view thereof, and Fig. 14(c) is a side view thereof. Fig. 15 represents the structure of a connecting plate applied in this embodiment, wherein Fig. 15(a) is a rear view thereof, and Fig. 15(b) is a side view thereof. Fig. 16 represents the structure of a mounting plate applied in this embodiment, wherein Fig. 16(a) is a rear view thereof, Fig. 16(b) is a front view thereof, and Fig. 16(c) is a side view of two mounting plates joined together.

The road reflection mirror of this embodiment comprises a reflection mirror base 100, four support rods 201, a mounting plate 302, and a connecting plate 500. These components are described below in detail.

As in the embodiment shown in Fig. 8 and Fig. 9, the reflection mirror base 100 has a front face and a rear face and is formed with a mirror surface 111 on the front face, the outer periphery of which is bent rearwardly to form a bend 112.

It is preferable to integrate the bend 112 with the reflection mirror base 100 as in this embodiment, thereby to simplify its manufacture and increase its strength. Additionally, the bend 12 is preferably provided along the entire periphery of the reflection mirror base 100, but it may be formed along a part thereof.

The material, shape, size of the reflection mirror base 100 are the same as those mentioned in the above embodiment according to Fig. 1 and Fig. 2, and no further explanation is necessary.

For the purpose of mounting the reflection mirror base 100 on a post or the like, there are four support rods 201 radially arranged on the rear face of the reflection mirror base 100 such that each support rod 201 has a basal end thereof positioned at the rear face centre of the reflection mirror base 100, with the rear face exposed. As shown in Fig. 14, the section of the support rod 201 defines a rectangle without one side. Its overall profile is an elongated rectangular parallelepiped rod without one surface, in which the basal end is wider than the extreme end. By making the basal end wider, the support rod 201 is improved in terms of design and bending strength. On the extreme end of the support rod 201, a riser 212 which has a hole 121 on each side thereof is provided to fix the extreme end to the bend 112 of the reflection mirror base 100. The riser 212 has an arcuate shape which curves along the bend 112 of the round reflection mirror base 100. The basal end of the support rod 201 is provided with a bolt hole 127 as well as a rivet hole 124 for temporal securement and antirotation.

As shown in Figs. 16(a), (b), the mounting plate 302 comprises a near-rectangular seat plate 231 and a mounting piece 232 rising from an edge of the seat plate 231 vertically and rearwardly with respect to the seat plate 231, and has a near L-shaped section. The seat plate 231 includes bolt holes 135 at predetermined positions, which correspond to the bolt hole 127 in the support rod 201. The mounting piece 232 includes two square bolt holes 137 for securing a connecting piece 141 of a fixture 400 between two mounting pieces 232 (see Fig. 13). The fixture 400 is to be fixed on a post or the like.

In installing this mounting plate 302, two mounting plates 302a, 302b are jointly employed as a mounting plate unit 303 as shown in Fig. 16(c). The mounting plate unit 303 is disposed approximately at the centre of the rear face of the reflection mirror base 100.

A connecting plate 500 serves to interconnect the basal ends of the radially arranged support rods 201. The connecting plate 500 is composed of a crisscross element for providing crisscross connection of the support rods 201, as shown in Fig. 12. Each end of the crisscross connecting plate 500 is formed with a hexagon hole 151 and a rivet hole 152 which correspond to the bolt hole 127 and the rivet hole 124 in the support rod 201, respectively.

In this alternative construction of a road reflection mirror, the four support rods 201 are arranged on the rear face of the reflection mirror base 100, with the rear face exposed. The mounting plate 302 and the connecting plate 500 are mounted on the rear face centre of the reflection mirror base 100. The installation process is hereinafter explained.

First, a flanged hexagon nut 160 is inserted into each hexagon hole 151 in the connecting plate 500. Then, each end of the crisscross connecting plate 500 is positioned with respect to the basal end of the support rod 201 by inserting the end of the connecting plate 500 into a hollow 128 of the support rod 201, with a flange 161 of the flanged hexagon nut 160 sandwiched therebetween. At this time, the bolt hole 127 in the support rod 201 and the flanged hexagon nut 160 should be aligned approximately with each other. Then, a rivet 129 is inserted into the rivet hole 152 in the connecting plate 500 and the rivet hole 124 in the basal end of the support rod 201. Thereby, the basal ends of the support rods 201 are connected with each other via the connecting plate 500 in a crisscross arrangement.

The connecting plate 500 which holds the support rods 201 in a crisscross arrangement is placed approximately at the rear face centre of the reflection mirror base 100. The extreme end of each support rod 201 is fixed to the bend 112 by fitting means 113 such as a screw or rivet inserted through the hole 121 in the extreme end of the support rod 201. The reflection mirror base 100 is packaged and transported in this state. At the installation site, the mounting plate unit 303 (mounting plates 302a, 302b) is mounted to the reflection mirror base 100. With the mounting pieces 232 of the mounting plate unit 303 (mounting plates 302a, 302b) positioned back to back with each other, the bolt 126 is inserted from each bolt hole 135 in the seat plates 131 into the bolt hole 127 in the support rod 201, and screwed by the flanged hexagon nut 160. Consequently, the connecting plate 500 is fixed to the basal ends of the support rods 201, and the mounting plate unit 303 is fixed across the basal ends of the support rods 201.

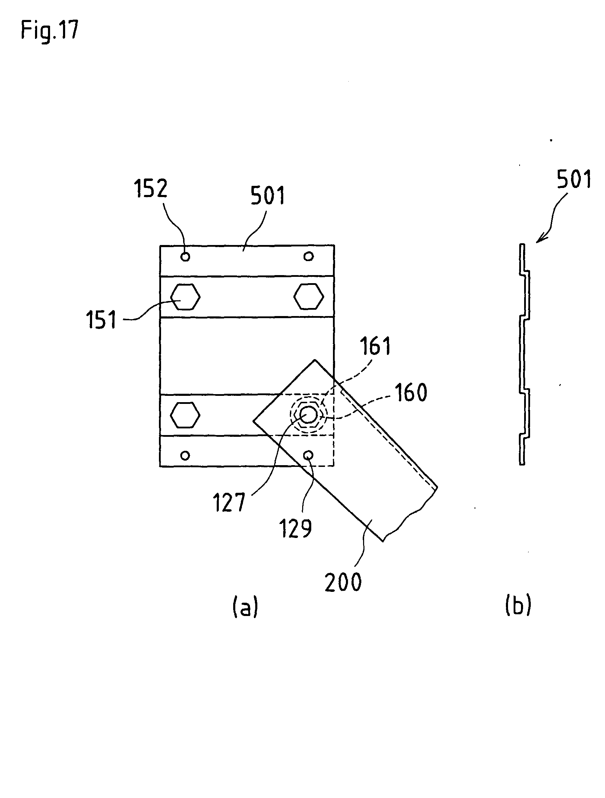

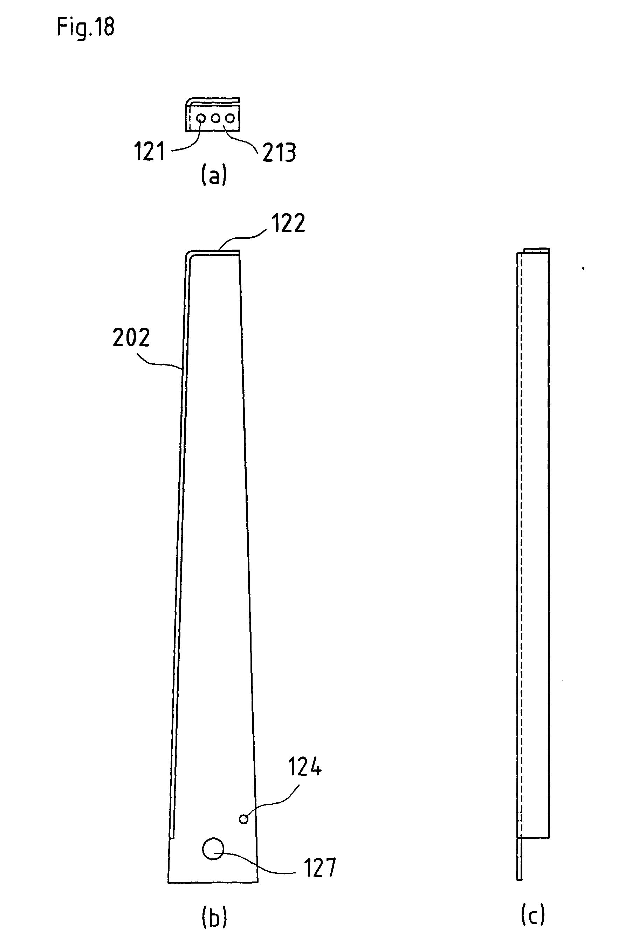

In addition to the connecting plate of the above structure, a connecting plate of Fig. 17 may be also utilised. Fig. 17 represents the structure of another connecting plate applied in an embodiment of the road reflection mirror according to the Invention 2, wherein Fig. 17(a) is a rear view thereof, and Fig. 17(b) is a side view thereof. Fig. 18 represents the structure of another support rod which may be applied in embodiment 2, wherein Fig. 18(a) is a view taken from the extreme end thereof, Fig. 18(b) is a front view thereof, and Fig. 18(c) is a side view thereof.

In contrast to the crisscross connecting plate 500 shown in Fig. 15, the connecting plate 501 of this embodiment has a rectangular shape to increase its strength. Each corner portion of the connecting plate 501 is provided with a hexagon hole 151 to accept the flanged hexagon nut 160 and a rivet hole 152 which corresponds to the rivet hole 124 in the support rod 202. In order to make the support rod 202 mountable on the rectangular connecting plate 501, the support rod 202 has an L-shaped section. In addition, for the purpose of preventing torsion, the support rod 202 has a riser 213 provided with three holes 121. The support rod 202 is radially connected at each corner portion of the connecting plate 501. This embodiment corresponds to the embodiment shown in Fig. 12 and Fig. 13 except that the connecting plate 501 and the support rod 202 respectively replace the connecting plate 500 and the support rod 201. Other than the connecting plate 501 and the support rod 202, the constitution of this embodiment is the same as that of the embodiment shown in Fig. 12 to Fig. 16.

Namely, the connecting plate 501 which holds the support rods 202 in a radial arrangement is placed approximately at the rear face centre of the reflection mirror base 100. The extreme end of each support rod 202 is fixed to the bend 112 of the reflection mirror base 100 by fitting means such as a screw or rivet inserted through the hole 121 in the riser 213. Also in this embodiment, packaging and transport is conducted in this state. At the installation site, with the mounting pieces 232 of the mounting plate unit 303 (mounting plates 302a, 302b) positioned back to back with each other, the bolt 126 is inserted from the bolt hole 135 in each seat plate 131 into the bolt hole 127 of the support rod 202, and screwed by the flanged hexagon nut 160. Consequently, the connecting plate 501 is fixed to the basal ends of the support rods 202, and the mounting plate unit 303 is fixed across the basal ends of the support rods 202.

In this constitution, the connecting plate 501 is shaped in rectangular form to increase its strength. Additionally, in order to facilitate the processing of the support rod 202, it is preferable to design the support rod 202 to have an L-shaped section. However, the L-section support rod 202 shows a lower bending strength than the support rod having a rectangular section without one side as shown in Fig. 14. Bearing this in mind, where the required strength is not so high as to apply the rectangular connecting plate 501 but still higher than the strength obtained by the crisscross connecting plate 500, and also where the bending strength of the support rod should not be decreased, it is advisable to employ the support rod 201 which has a rectangular section without one side as shown in Fig. 14, in combination with the connecting plate 4 as shown in Fig. 5.

Except for applying the combination of the connecting plate 4 and the support rod 201, this embodiment has the same constitution as the one shown in Fig. 12 to Fig. 16. Therefore, no further explanation is necessary.

As described above, the connecting plates 500, 501 only need to have a shape which provides sufficient strength to support the reflection mirror base 100 via any of the support rods 200, 201, 202. Hence, allowing for the strength of the support rods 200, 201, 202 and the size of the reflection mirror base 100, the shape of the connecting plates 500, 501 may be judiciously designed to obtain a required strength. Provided the connecting plates 500 (or the connecting plates 501) have the identical shape, a ribbed connecting plate having a notch or the like is advantageous in exhibiting a greater bending strength than a flat connecting plate.

In the above description, the alternative constructions of embodiment 2 also employ four support rods 2. But the number of the support rods is optional as far as they exhibit sufficient strength to support the reflection mirror base 100, and should not limited to any particular number. For example, where the reflection mirror base 100 is small and supportable without much strength, three support rods 210 are radially arranged as shown in Fig. 19. On the other hand, where the reflection mirror base 100 is large and needs a great strength to be supported, four or more support rods are utilised. In Fig. 20, six support rods 220 are radially arranged accordingly.

In any of the embodiments according to the Invention, the mirror surfaces 11, 111 of the reflection mirror base are preferably coated with a photocatalyst such as a thin layer of titanium oxide. The photocatalyst, typically represented by titanium oxide, not only improves the defogging property of the mirror surfaces 11, 111, but also imparts antisoot and antifouling properties. Such photocatalysts may include ZnO, SnO₂, SrTiO₃, WO₃, BiO₃, FeO₃, etc.

## Claims

1. A mirror for outdoor use comprising a reflection mirror base (1,100) having a front face and a rear face and formed with a mirror surface (11, 111) on the front face, an outer periphery (12, 13, 112) of the mirror base being bent rearwardly away from the mirror surface (11, 111), a plurality of support rods (2, 200, 201, 202, 210, 220) arranged on the rear face of the mirror base such that each support rod (2, 200, 201, 202, 210, 220) has a first end positioned in the vicinity of the centre of the mirror base rear face and a second end fixed to the bent peripheral portion (12, 13, 112) of the mirror base, with the rear face of the mirror base being substantially exposed, and a mounting plate (3, 300, 302) disposed approximately at the centre of the mirror base rear face and serving to fix the mirror base (1, 100) to a post or similar support structure, wherein the mounting plate comprises a first portion (31, 131, 231) for fixing to the first end of each support rod and a second portion (32, 132, 232) rising from the seat plate for fixing to a post or similar support structure.

2. A mirror according to claim 1 comprising:
a reflection mirror base (1) having a front face and a rear face and formed with a mirror surface (11) on the front face, an outer periphery of which is bent rearwardly to form a bend (12), which in turn is bent outwardly with respect to the mirror surface to form a flange (13),
a plurality of support rods (2, 210, 220)radially arranged on the rear face of the reflection mirror base such that each support rod (2, 210, 220) has a first end thereof positioned at a rear face centre of the reflection mirror base and second end thereof fixed to the flange (13), with the rear face of the reflection mirror base exposed, and
a mounting plate (3) disposed approximately at the rear face centre of the reflection mirror base and serving to fix the reflection mirror base to a post or similar support structure, wherein the mounting plate (3) comprises a plate (31) to be fixed to the first end of each support rod (2, 210, 220) and a mounting piece (32)rising from the plate (31) to be fixed to the post or similar support structure.

3. A mirror according to claim 2, wherein a protective cover (7) is equipped on the flange (13) and the second ends of the support rods (2, 210, 220)fixed to the flange (13).

4. A mirror according to claim 1 comprising:
a reflection mirror base (100) having a front face and a rear face and formed with a mirror surface (111) on the front face, an outer periphery of which is bent rearwardly to form a bend (112),
a plurality of support rods (200, 201, 202, 210, 220) radially arranged on the rear face of the reflection mirror base such that each support rod (200, 201, 202, 210, 220) has a first end thereof positioned at a rear face centre of the reflection mirror base and a second end thereof fixed to the bend (112), with the rear face of the reflection mirror base exposed, and
a mounting plate (300, 302) disposed approximately at the rear face centre of the reflection mirror base and serving to fix the reflection mirror base to a post or similar support structure, wherein the mounting plate (300, 302)comprises a plate (131, 231) to be fixed to the first end of each support rod and a mounting piece (132, 232) rising from the plate to be fixed to the post or similar support structure.

5. A road reflection mirror according to any of the preceding claims, which further comprises a connecting plate (4, 500, 501) disposed approximately at the rear face centre of the reflection mirror base (1, 100), wherein the first ends of the radially arranged support rods (2, 200, 201, 202, 210, 220) are connected with each other via the connecting plate (4, 500, 501) and fixed on the plate (31, 131, 231) as connected.

6. A road reflection mirror according to any of claims 1, 2, 3 or 4, wherein the mounting plate (3, 300, 302) comprises two mounting plates elements (3, 300, 302) each having an essentially L-shaped section, and wherein the plates (31, 131, 231) of the mounting plates are fixed at the first ends of the support rods (2, 200, 201, 202, 210, 220), with the mounting pieces (32, 132, 232) thereof positioned back to back with each other at a predetermined interval.

7. A road reflection mirror according to any of the preceding claims, wherein the mirror surface is coated with a photocatalyst.
